# EUROPEAN PATENT APPLICATION

(11) **EP 2 071 372 A1**
(43) Date of publication of application: **17.06.2009**
(21) Application number: 07828808.1
(22) Date of filing: 28.09.2007
(51) Int. Cl.: G02B 6/122, G02B 6/42

(54) **OPTICAL DEVICE AND OPTICAL DEVICE MANUFACTURING METHOD**

(30) Priority: 29.09.2006 JP 2006268493
(71) Applicant: SUMITOMO OSAKA CEMENT CO., LTD., Chiyoda-ku Tokyo 102-8465 (JP)
(72) Inventor: MORI, Shingo, Tokyo 102-8465 (JP); KANNO, Shinsuke, Tokyo 102-8465 (JP); SUGAMATA, Toru, Tokyo 102-8465 (JP)
(74) Representative: Vuillermoz, Bruno
(86) International application number: PCT/JP2007/069067
(87) International publication number: WO 2008/038795

(57) **Abstract**

One object of the present invention is to provide an optical device having an optical waveguide splitting structure capable of detecting a portion of light traveling through an optical waveguide with high efficiency, and the present invention provides an optical device, wherein, among end surfaces of an optical medium, an end surface of an optical medium that faces a front side in a direction in which light travels through an optical waveguide is substantially vertical to the surface of the optical waveguide; thereby, a part of the light traveling in the light wave guide is split in the direction substantially vertical to the light waveguide surface and output from the front end surface, and the split light can be highly efficiently captured by a light detector arranged on the light waveguide element because the radiation direction is substantially vertical to the light waveguide.

## Description

### Technical Field

The present invention relates to an optical device, and more particularly, to an optical device having a structure that splits light traveling through an optical waveguide.
Priority is claimed on Japanese Patent Application No. 2006-268493, filed September 29, 2006, the content of which is incorporated herein by reference.

### Background Art

In an optical communication system that transmits optical signals through an optical fiber, various kinds of functional elements that perform various processes required for light transmission on light have been used. It is possible to accurately obtain desired characteristics by monitoring the output light of the functional elements and controlling the operations of the elements by feedback on the basis of the monitored results.

For example, as a functional element that modulates the intensity of an optical signal, a light intensity modulator has been used in which a Mach-Zehnder optical waveguide, a modulation electrode, and a bias electrode are formed on a substrate made of, for example, lithium noibate (LiNbO₃; hereinafter referred to as LN). In the light intensity modulator, it is necessary to perform modulation using a phase difference of 0 and π between two light waves that are combined with each other at a wave combination point of the Mach-Zehnder optical waveguide as a reference (it is necessary to adjust a bias at a modulation point). In order to obtain the reference phase difference, the modulated signal light is monitored and a voltage applied from the bias electrode is adjusted.

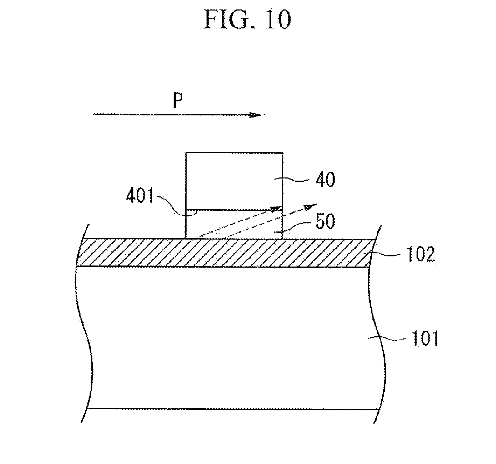

As an element capable of implementing light monitoring, Patent Document 1 discloses an optical-waveguide-type element with a monitor. Fig. 10 is a cross-sectional view schematically illustrating the optical-waveguide-type element with a monitor. In Fig. 10, an optical waveguide 102 is formed on a substrate 101, and an evanescent component introduction layer 50 having a refractive index that is greater than that of the optical waveguide 102 is provided on the optical waveguide 102. An optical detector 40 is provided on the optical waveguide 102 with the evanescent component introduction layer 50 interposed therebetween. In the related art, it is considered that the important factor of the evanescent component introduction layer is its structure, specifically, the thickness and the length of the evanescent component introduction layer 50, but the shape of an end surface in an output direction is not considered to be important. For convenience of description, Fig. 10 schematically shows the end surface of the evanescent component introduction layer 50 that is vertical to the substrate 101. However, actually, in the element, since a thin film, such as the evanescent component introduction layer 50, is formed by a sputtering method or a vapor deposition method, the thickness of the thin film is gradually reduced toward an output end, and the end surface is not vertical to the substrate 101.

In the optical-waveguide-type element with a monitor shown in Fig. 10, a portion of light that travels through the optical waveguide 102 in a direction P of Fig. 10 leaks as an evanescent component from the optical waveguide 102 to the outside and then trevels. Therefore, the evanescent component passes through the evanescent component introduction layer 50 and is then incident into the optical detector 40. A fraction of the evanescent component is incident on a light receiving surface 401 of the optical detector 40. In this way, a portion of the evanescent component is detected, and the traveling light is monitored.
Patent Document 1: JP-A-2001-215371

### Disclosure of the Invention

### Problem to be Solved by the Invention

However, in the optical-waveguide-type element with a monitor, since the incident angle of the evanescent component on the optical detector 40 is about 5 degrees (estimated value) with respect to the traveling direction P, most of the incident light is scattered to the outside of the optical detector 40, and a fraction of the light is not incident on the light receiving surface 401. As a result, the monitoring effect of the optical detector 40 (light receiving sensitivity) is very small, and it is difficult to obtain a practical performance.

The present invention has been made in order to solve the above-mentioned problems, and an object of the present invention is to provide an optical device having an optical waveguide splitting structure capable of detecting a portion of light traveling through an optical waveguide with high efficiency, and a method of manufacturing the optical device.

### Means for Solving the Problem

The present invention has been made in order to solve the above-mentioned problems, and an aspect of the present invention provides an optical device including: an optical waveguide element that has an optical waveguide formed on a substrate; and an optical medium that is provided on the surface of the substrate so as to cover at least a portion of the optical waveguide. A side surface of the optical medium that faces a front side in a direction in which light travels through the optical waveguide is substantially vertical to the surface of the optical waveguide.
In the present invention, 'an end surface that is substantially vertical to the surface of an optical waveguide' means 'an end surface that is inclined at an angle that is equal to or greater than 45 degrees and equal to or less than 135 degrees with respect to the surface of an optical waveguide'.
A portion of light traveling through the optical waveguide leaks into the optical medium. In the optical device according to the present invention, an end surface of the optical medium that faces the front side in the traveling direction of light in the optical waveguide (hereinafter, referred to as a 'leading end surface') is formed so as to be substantially vertical to the surface of the optical waveguide. Therefore, the leakage light is radiated from the leading end surface in a direction that is substantially vertical to the surface of the optical waveguide. That is, the optical device according to the present invention can split a portion of light traveling through the optical waveguide in the direction that is substantially vertical to the optical waveguide. In addition, since the splitting direction of light is substantially vertical to the optical waveguide, the radiated split light is substantially vertically incident on the optical detector that is provided above the optical waveguide, and the split light is incident on the optical detector without any leakage. Therefore, it is possible to monitor light traveling through the optical waveguide with high efficiency, using the split light as monitor light.

In the optical device, preferably, the optical medium is formed by a thin film forming process and a pattern forming process.
In the optical device, preferably, after the optical medium is formed by the thin film forming process, or the thin film forming process and the pattern forming process, the leading end surface of the optical medium is processed to adjust at least one of the flatness of the leading end surface and an angle formed between the leading end surface and the surface of the optical waveguide.
According to the optical device of the present invention, it is possible to improve the flatness of the leading end surface and set the angle between the leading end surface and the surface of the optical waveguide to a desired value (for example, 90 degrees). In this way, it is possible to split a portion of light traveling through the optical waveguide from the leading end surface with high efficiency.

In the optical device, preferably, the optical medium is a semiconductor thin film or a dielectric thin film.
The semiconductor or the dielectric forming the optical medium is transparent with respect to light traveling through the optical waveguide. Therefore, it is possible to emit the split light with high efficiency, without any attenuation in the optical medium. In addition, since the semiconductor material or the dielectric material can be easily formed into thin films by a general semiconductor manufacturing process, it is possible to easily manufacture an optical device with a low manufacturing cost.

In the optical device, preferably, the optical medium is provided so as to come into contact with the surface of the optical waveguide.
Since the optical medium is directly provided on the optical waveguide, the amount of light incident into the optical medium is larger than that in an optical device in which a buffer layer made of a different material is provided between an optical medium and an optical waveguide. Therefore, the amount of split light is not reduced.

In the optical device, preferably, the refractive index of the optical medium at the wavelength of the light traveling through the optical waveguide is greater than that of the substrate at the wavelength.
The mode distribution of light traveling through the optical waveguide is concentrated on the optical medium having a high refractive index. As a result, the amount of light incident into the optical medium is increased. Therefore, it is possible to emit a large amount of light as split light.

In the optical device, preferably, a line of intersection between the leading end surface of the optical medium and the surface of the optical waveguide is inclined at a predetermined angle with respect to the traveling direction of the light in the optical waveguide. The predetermined inclination angle means an angle other than a right angle.
The optical medium is arranged such that the line of intersection is not perpendicular to the traveling direction of light but is inclined with respect to the traveling direction. Therefore, light traveling through the optical waveguide or light that is incident on the optical medium and travels therethrough is not reflected from the leading end surface. Therefore, reflected light is not combined with the propagation mode of the optical waveguide, and it is possible to prevent the generation of return light.

In the optical device, preferably, a plurality of optical media are provided along the optical waveguide.
A portion of traveling light is emitted from the optical waveguide to each of the plurality of optical media provided along the optical waveguide and then radiated as split light in a direction that is substantially vertical to the substrate. Therefore, it is possible to easily adjust the total amount of split light according to the number of optical media.

Preferably, the optical device further includes an optical detector that is provided above the optical medium. Preferably, the optical detector detects a portion of light that travels through the optical waveguide and is radiated to the optical medium in the direction that is substantially vertical to the surface of the optical waveguide, thereby monitoring light traveling through the optical waveguide.
The optical detector can detect the radiated split light to monitor light traveling through the optical waveguide.

In the optical device, preferably, the optical medium is made of a semiconductor, and is connected to the ground.
When the optical medium is made of a semiconductor material and is connected to the ground, charge in the substrate is discharged from a ground portion to the outside. Therefore, for example, even when a photodiode is used as the optical detector and the photodiode is provided on the optical medium so as to come into contact with the optical medium, charge is discharged to the photodiode, and it is possible to prevent the damage of the photodiode.

According to another aspect of the present invention, there is provided a method of manufacturing an optical device including an optical waveguide element that has an optical waveguide formed on a substrate and a thin optical medium that is provided so as to cover at least a portion of the optical waveguide. The method includes: a thin film forming step of forming the thin optical medium with a predetermined material on the substrate; a pattern forming step of patterning the optical medium such that it covers at least a portion of the optical waveguide and a side surface thereof that faces a front side in a direction in which light travels through the optical waveguide is substantially vertical to the surface of the optical waveguide; and a processing step of adjusting at least one of the flatness of the leading end surface and an angle formed between the leading end surface and the surface of the optical waveguide.
According to the manufacturing method of the present invention, it is possible to manufacture an optical device having the above-mentioned excellent effects.

### Effects of the Invention

According to the present invention, it is possible to split a portion of light traveling through an optical waveguide in a direction that is substantially vertical to the surface of an optical waveguide with high efficiency. In addition, it is possible to detect the split light to monitor light traveling through the optical waveguide with high efficiency.

### Brief Description of the Drawings

Fig. 1 is a cross-sectional view schematically illustrating an optical device provided along the traveling direction of light in an optical waveguide.
Fig. 2A is a diagram illustrating the overall structure of the optical device.
Fig. 2B is a diagram illustrating the optical device from which an adhesive layer and an optical detector are removed such that an optical medium 20 is viewed.
Fig. 3 is a diagram illustrating experimental results indicating the relationship between the length L of an optical medium and the intensity of light radiated in a direction that is vertical to a substrate.
Fig. 4 is a diagram illustrating an optical device according to Example 1 of the present invention.
Fig. 5 is a diagram illustrating an optical device according to Example 2 of the present invention.
Fig. 6 is a diagram illustrating an optical device according to Example 3 of the present invention.
Fig. 7 is a diagram illustrating an optical device according to Example 4 of the present invention.
Fig. 8 is a diagram illustrating an optical device according to Example 5 of the present invention.
Fig. 9 is a diagram illustrating an optical device according to Example 6 of the present invention.
Fig. 10 is a cross-sectional view schematically illustrating an optical-waveguide-type element with a monitor according to the related art.

### Reference Numerals

10: Optical waveguide element
11: Monitor unit
20: Optical medium
30: Adhesive layer
40: Optical detector
401: Light receiving surface of optical detector
50: Evanescent component introduction layer
101: LN substrate
102: Optical waveguide
103: Main Mach-Zehnder optical waveguide
104a, 104b: Sub Mach-Zehnder optical waveguide
P: Traveling direction of light

### Best Mode for Carrying Out the Invention

Hereinafter, exemplary embodiments of the present invention will be described in detail with reference to the accompanying drawings.

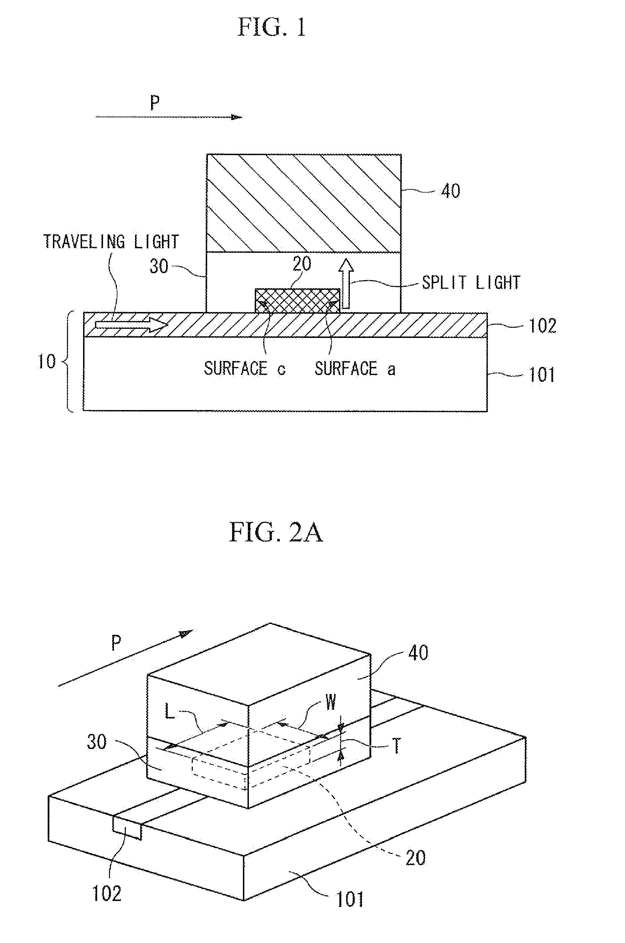

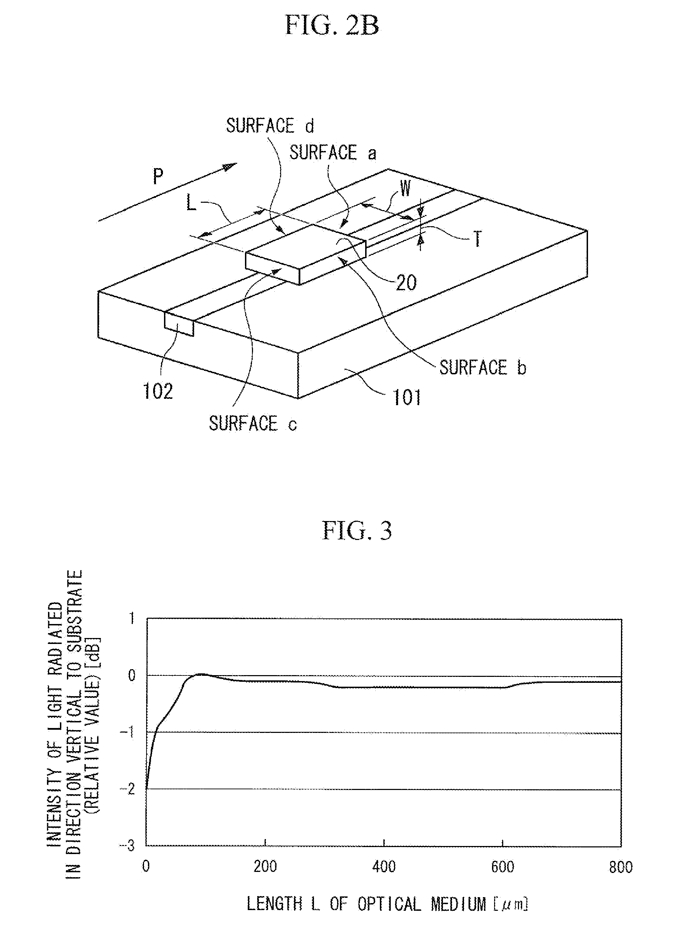

Figs. 1 and 2 are diagrams illustrating an optical device according to an embodiment of the present invention. Specifically, Fig. 1 is a cross-sectional view illustrating the optical device provided along a direction in which light travels through an optical waveguide (which corresponds to a direction P of Fig. 2), and Fig. 2 is a diagram illustrating the outward appearance of the optical device (perspective view). The optical device according to this embodiment includes an optical waveguide element 10, an optical medium 20 that is provided on the surface of the optical waveguide element 10, an optical detector 40 that is provided above the optical medium 20, and an adhesive layer 30 that adheres the optical detector 40 to the upper surface of the optical medium 20.
Fig. 2A is a diagram illustrating the overall structure of the optical device, in which the optical medium 20 is concealed by the adhesive layer 30 and the optical detector 40. Fig. 2B is a diagram illustrating the optical device from which the adhesive layer 30 and the optical detector 40 are removed such that the optical medium 20 is viewed.

The optical waveguide element 10 includes a LN substrate 101 and an optical waveguide 102 that is formed on the LN substrate 101 by the thermal diffusion of titanium (Ti). For clarity of description, in the specification, as shown in Fig. 2, a linear waveguide pattern is formed on the optical waveguide 102. However, other patterns may be formed on the optical waveguide. For example, an optical device including a Mach-Zehnder optical waveguide 102 may also be applied to a light intensity modulator.

It is preferable that the optical medium 20 be made of a transparent material that has a low absorption loss with respect to the wavelength of light traveling through the optical waveguide 102 and has a refractive index that is greater than that of the LN substrate 101.
In this embodiment, the wavelength λ of traveling light is set to 1.55 µm. The refractive index of the LN substrate 101 is about 2.2 at the wavelength. Therefore, the optical medium 20 is made of silicon (Si) that has a refractive index of about 3.5. Any material other than silicon may be used as long as it satisfies the above-mentioned conditions (optical characteristics). For example, a semiconductor, such as germanium (Ge) (refractive index: 4.1), or a dielectric material, such as a tantalum oxide (Ta₂O₅) (refractive index: 2.3) may be used.

As shown in Fig. 2, the optical medium 20 has a rectangular shape that has a length L in the traveling direction P and a width W in a direction that is vertical to the traveling direction P, as viewed from the upper side of the LN substrate 101. In addition, the optical medium 20 has a thickness T. Among the end surfaces (side surfaces) of the optical medium 20, end surfaces that are disposed on the optical waveguide 102, that is, a leading end surface (a surface a in Figs. 1 and 2) that faces the front side in the traveling direction of light in the optical waveguide and an end surface (a surface c in Figs. 1 and 2, which is referred to as a 'rear end surface) that faces the rear side in the traveling direction, are formed as planes that are substantially vertical to the surface of the optical waveguide 102.
The size of the planar portion in the horizontal direction (the width W of the optical medium 20) is at least several times larger than the mode diameter of light traveling through the optical waveguide 102 (several µm to 10 µm). For example, the size of the planar portion in the horizontal direction is 20 µm. There is no upper limit of the width W. However, when the width W is sufficiently larger than the mode diameter of the traveling light, a portion of the optical medium on the optical waveguide 102, for example, a portion having a width of 20 µm may be formed as a plane that is substantially vertical to the surface of the optical waveguide. That is, the entire leading end surface and the entire rear end surface (the surfaces a and c) are not necessarily flat, but only a portion of each of the end surfaces on the optical waveguide 102 may be flat. The entire leading end surface and the entire rear end surface (the surfaces a and c) may be curved in the direction of the width W.

When the leading end surface and the rear end surface (the surfaces a and c) of the optical medium 20 are substantially vertical to the surface of the optical waveguide 102, a portion of light traveling through the optical waveguide 102 is radiated from the leading end surface (surface a) in a direction that is substantially vertical to the surface of the optical waveguide 102, and is split from the optical waveguide 102.
In the present invention, as described above, the leading end surface (surface a) is substantially vertical to the surface of the optical waveguide 102. That is, the angle formed between the leading end surface and the surface of the optical waveguide is equal to or greater than 45 degrees and equal to or less than 135 degrees. It is preferable that the angle be in the range of 80 to 100 degrees.
The rear end surface (the surface c) that faces the rear side in the traveling direction of light in the optical waveguide may be formed so as not to be substantially vertical to the optical waveguide 102. In this case, it is also possible to obtain the effects of the present invention. That is, even when the rear end surface (the surface c) is formed so as not to be substantially vertical to the surface of the optical waveguide 102, there is no influence on the split light that is radiated from the leading end surface (surface a) in a direction that is substantially vertical to the surface of the optical waveguide 102.

When the optical medium 20 is made of silicon, a general semiconductor manufacturing process can be used to form the optical medium 20. That is, first, the optical waveguide 102 is formed on the LN substrate 101, and a silicon film with a predetermined thickness (thickness T) is formed on the entire surface of the LN substrate 101 by, for example, a sputtering method or a vapor deposition method (thin film forming process). Then, for example, a lift-off method or a dry etching method is used to form a pattern such that the optical medium 20 has a rectangular shape (pattern forming process). For example, it is possible to form the optical medium 20 by using CF+CHF as a reactant gas of dry etching to control the angles of the etched end surfaces (the angles formed between the surfaces a to d and the surface of the optical waveguide 102).

In order to obtain the etched end surfaces with desired angles, a process of irradiating the etched end surface with a laser beam may be added. This type of laser trimming makes it possible to improve the flatness of the end surface.
Only the pattern forming process may be used to process the end surface of the optical medium 20 to be substantially vertical to the surface of the optical waveguide 102. In addition, after the thin film is formed, only the laser beam irradiating process may be used to process the end surface of the optical medium 20 to be substantially vertical to the surface of the optical waveguide 102.

The adhesive layer 30 is provided on the optical medium 20, and the adhesive layer 30 adheres the optical detector 40 to the upper surfaces of the optical waveguide 102 and the LN substrate 101. When the optical waveguide 102 and the optical detector 40 disposed above the optical waveguide are adjacent to each other, an excessively large amount of traveling light is likely to be absorbed by the optical detector 40, which results in an increase in the loss of the traveling light. However, in this embodiment, since the optical detector 40 is spaced a predetermined distance from the optical waveguide 102 by the adhesive layer 30, it is possible to prevent the above-mentioned problem.
In order to solve the above-mentioned problem, the adhesive layer 30 is made of a material that is transparent with respect to the wavelength of traveling light and has a refractive index that is less than that of the optical waveguide 102 or the optical medium 20.
In addition, in Figs. 1 and 2, the adhesive layer 30 covers the side surfaces of the optical medium 20. However, the adhesive layer 30 may be formed on only the optical medium 20 such that the side surfaces (surface a to d) of the optical medium 20 are exposed to air.

In the optical device having the above-mentioned structure according to this embodiment, a portion of light traveling through the optical waveguide 102 is split and radiated from the leading end surface (surface a) of the optical medium 20 in a direction that is substantially vertical to the surface of the optical waveguide 102. Since the radiation direction of light is substantially vertical to the optical waveguide 102, the optical detector 40 provided above the optical waveguide 102 can effectively detect the split light.

Although the embodiment of the present invention has been described in detail with reference to the accompanying drawings, the detailed structure of the present invention is not limited to the embodiment. For example, various modifications in the design can be made without departing from the scope of the present invention.

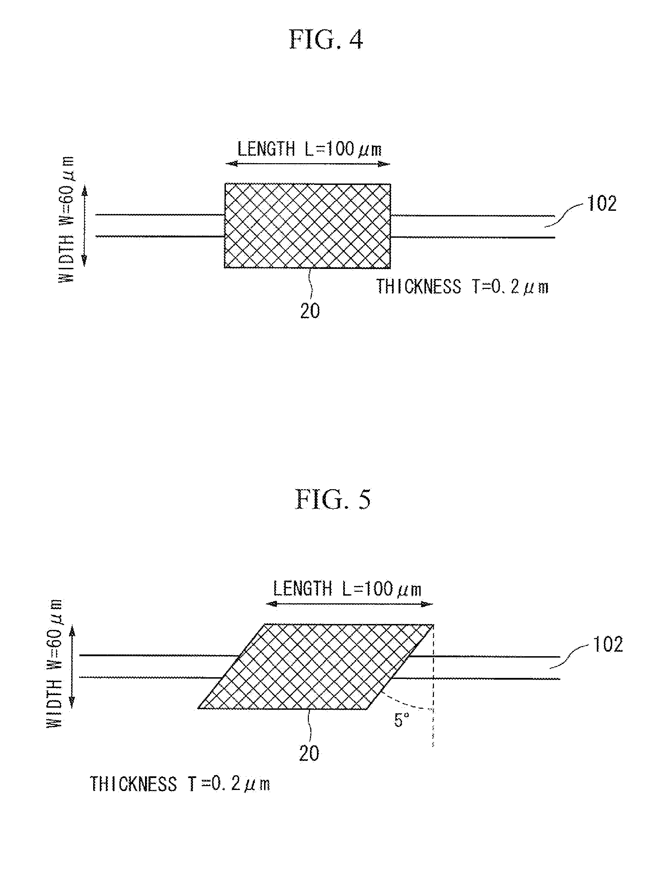

For example, the shape of the optical medium 20 in a plan view is not limited to a rectangle. The optical medium 20 may have any shape in a plan view as long as the leading end surface (surface a) thereof is formed so as to satisfy the above-mentioned conditions.
A line of intersection between the leading end surface (surface a) and the surface of the optical waveguide 102 may be perpendicular to the traveling direction of light in the optical waveguide 102, or it may be inclined at an angle that is several degrees to about 45 degrees smaller than 90 degrees with respect to the traveling direction of light in the optical waveguide 102. It is preferable that the inclination angle be in the range of 2 to 7 degrees. For example, the leading end surface and the rear end surface (the surfaces a and c) may be inclined such that the shape of the optical medium 20 in a plan view is a parallelogram (see Example 2 (Fig. 5), which will be described below). In this case, it is possible to prevent light reflected from the leading end surface and the rear end surface (the surfaces a and c) from being recombined with the propagation mode of the optical waveguide 102 to generate return light.

The optical medium 20 is not directly formed on the LN substrate 101, but a thin film made of a different material may be provided between the optical medium 20 and the LN substrate 101.
In addition, the optical medium 20 is not limited to a thin film that is formed by a semiconductor manufacturing process, as described above. For example, the optical medium may be a bulk-shaped member.

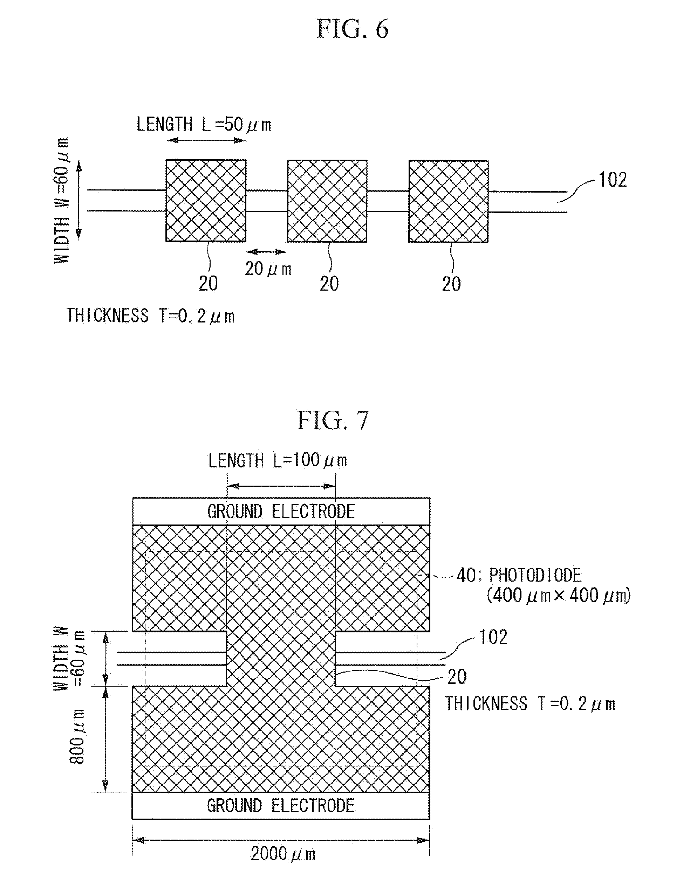

Further, the optical medium 20 may be directly contacted with the optical detector 40 without the adhesive layer 30 therebetween. However, when the optical medium 20 is made of a semiconductor, the optical medium 20 may be connected to the ground such that charge in the LN substrate 101 is not discharged to the optical detector 40 (see Example 4 (Fig. 7), which will be described below).
A photodiode may be used as the optical detector 40, but the present invention is not limited thereto. For example, a mirror or a lens may be used to guide split light that is radiated in a direction that is substantially vertical to the substrate to the photodiode.

When the optical device according to this embodiment is applied to a light intensity modulator, the optical waveguide element 10 further includes an electrode that applies a modulation electric field to the optical waveguide 102 and a buffer layer that is provided on the electrode and prevents light traveling through the optical waveguide 102 from being absorbed and lost by the electrode. The buffer layer contains, for example, a silicon oxide (SiO₂). Therefore, instead of the adhesive layer 30 shown in Figs. 1 and 2, the buffer layer may be provided on the entire surface of the substrate such that it is arranged between the optical medium 20 and the optical detector 40. Alternatively, both the buffer layer and the adhesive layer 30 provided on the buffer layer may be used. In addition, the electrode is provided on the buffer layer at a predetermined position in the vicinity of the optical waveguide 102. When a modulation electric field is applied from the electrode to the optical waveguide 102, the refractive index of the optical waveguide is changed by an electro-optical effect, and the phase of a light wave passing through the portion to which the modulation electric field is applied is changed. The phases of the light waves split from the Mach-Zehnder optical waveguide are modulated, and the modulated light waves are combined with each other. Then, the combined light is subjected to intensity modulation.

The material forming the substrate of the optical waveguide element 10 is not limited to LN. For example, various semiconductor or dielectric substrates, such as a silicon substrate and a quartz substrate, may be used.

### Example 1

Fig. 3 is a graph illustrating the relationship between the length L of the optical medium 20 and the intensity of light radiated in a direction that is vertical to the substrate, that is, the surface of the optical waveguide obtained by experiments. In the experiments, the wavelength λ of traveling light was 1.55 µm. The optical medium 20 is a silicon (Si) thin film (refractive index n = 3.5) that is formed on the optical waveguide element 10 using the LN substrate 101 (refractive index n = 2.2), and the shape of the optical medium 20 in a plan view is a rectangle (width W = 60 µm and thickness T = 0.2 µm) as shown in Fig. 2. In addition, the end surface a is formed at an angle of 90 degrees. In Fig. 3, the horizontal axis indicates the length L (µm) of the optical medium 20, and the vertical axis indicates a value (dB) obtained by normalizing the intensity of light radiated in a direction that is vertical to the substrate with its maximum value.

As can be seen from the data shown in Fig. 3, when the length L of the optical medium 20 is equal to or less than about 100 µm, the intensity of light radiated in the direction that is vertical to the substrate monotonically increases with respect to the length L. When the length L is equal to or greater than about 100 µm, there is little variation in the intensity of light radiated in the direction that is vertical to the substrate. Therefore, in the case of the optical medium 20 having these parameters, it is possible to appropriately adjust the length L in the range of 100 µm or less to control the intensity of light radiated in the direction that is substantially vertical to the substrate, that is, the surface of the optical waveguide.

Fig. 4 is a diagram illustrating an optical device according to Example 1 of the present invention that is designed on the basis of the experimental data of Fig. 3. In Example 1, the optical medium 20 had a rectangular shape in a plan view that had a length L of 100 µm, a width W of 60 µm, and a thickness T of 0.2 µm. At the length (L = 100 µm), the intensity of light radiated in the direction that is vertical to the substrate (specifically, in the direction that is vertical to the surface of the optical waveguide) was substantially the maximum.

Fig. 5 is a diagram illustrating an optical device according to Example 2 of the present invention. In the optical device according to Example 2, the intensity of light radiated in the direction that is substantially vertical to the substrate is equal to that in Example 1, and it is possible to reduce return light reflected from the leading end surface and the rear end surface (the surfaces a and c). That is, the leading end surface and the rear end surface (the surfaces a and c) were formed so as to be inclined at an angle of 5 degrees with respect to a surface that is perpendicular to the optical waveguide 102, and the optical medium 20 had a parallelogram shape in a plan view. In this way, the recombination between reflected light and light traveling through the optical waveguide 102 was reduced, and the generation of return light was prevented.

Fig. 6 is a diagram illustrating an optical device according to Example 3 of the present invention. In Example 3, three optical media 20, each having a rectangular shape in a plan view that had a length L of 50 µm, a width W of 60 µm, and a thickness T of 0.2 µm, were provided in a line on the optical waveguide 102 at intervals of 20 µm, thereby forming the optical device. As shown in Fig. 3, even when the length L of the optical mediums 20 was equal to or greater than 100 µm, there was no variation in the intensity of light radiated in the direction that was substantially vertical to the surface of the optical waveguide, and it was possible to easily increase the intensity of light by increasing the number of optical media 20.

Fig. 7 is a diagram illustrating an optical device according to Example 4 of the present invention. In the optical device according to Example 4, a photodiode (the optical detector 40 represented by a dotted line in Fig. 7) is provided on the optical medium 20. The optical medium 20 includes a region that is disposed on the optical waveguide 102 (length L = 100 µm and width W = 60 µm) and two regions that are disposed at both sides of the optical waveguide 102 (each of the two regions has a length of 2,000 µm and a width of 800 µm). The photodiode 40 has a size of 400 µm x 400 µm. Portions outside the two regions disposed at both sides of the optical waveguide 102 come into contact with a ground electrode. Therefore, in the optical device, the photodiode was provided so as to come into direct contact with the upper surface of the optical medium 20. However, since charge stored in the substrate was discharged from the ground electrode, it was possible to prevent the damage of the photodiode due to discharge.

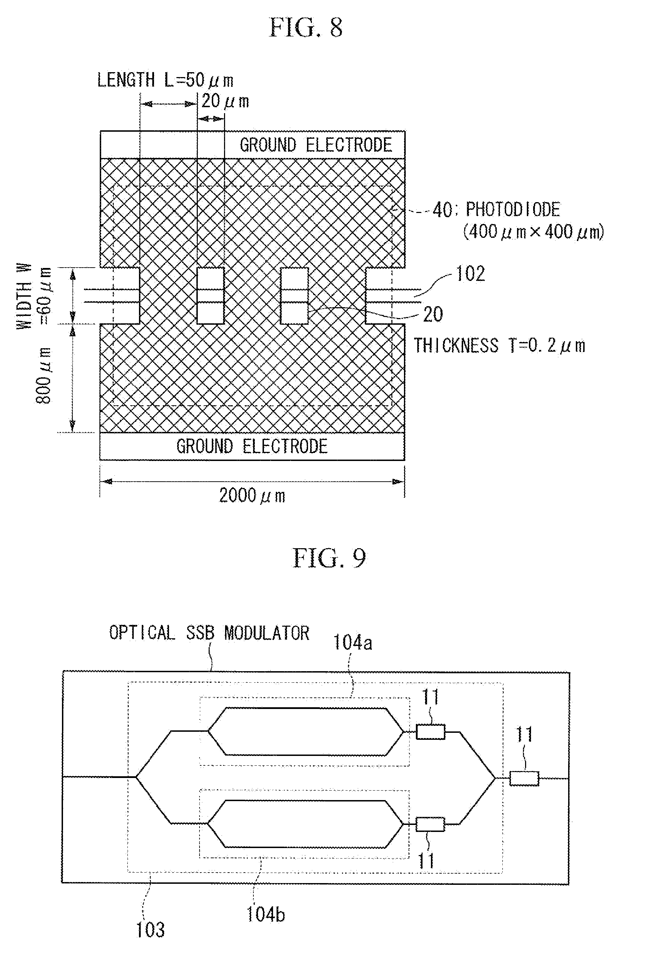

Fig. 8 is a diagram illustrating an optical device according to Example 5 of the present invention. Example 5 is a combination of Example 3 and Example 4. In Example 5, the optical medium 20 has three regions, each having a length L of 50 µm and a width W of 60 µm, on the optical waveguide 102, and is connected to a ground electrode that is provided outside the photodiode. In this way, the intensity of light radiated in the direction substantially vertical to the substrate was improved, and the damage of the photodiode due to discharge was prevented.

In Example 5, the thickness T of the optical medium 20 was 0.2 µm. However, the thickness T of the optical medium 20 may be designed in the range of about 0.05 µm to about 0.5 µm.

Fig. 9 is a diagram illustrating an optical SSB modulator using an optical device according to Example 6 of the present invention.
The optical SSB modulator includes sub Mach-Zehnder optical waveguides 104a and 104b that are provided in both arms of a main Mach-Zehnder optical waveguide 103.
The sub Mach-Zehnder optical waveguides 104a and 104b perform intensity modulation using modulation signals having a phase difference of π/2 therebetween. At the same time, a bias electric field is applied to drive the Mach-Zehnder optical waveguides such that the modulation points of the sub Mach-Zehnder optical waveguides 104a and 104b have a phase difference of π and the main Mach-Zehnder optical waveguide 103 has a phase difference of π/2 or -π/2. SSB (single side band) modulation that outputs only one side of a side band generated by modulation is performed by the above-mentioned driving method.

It is necessary to accurately adjust the modulation points by bias control in order to accurately perform the SSB modulation. Therefore, in Example 6, as shown in Fig. 9, monitor units 11 were provided on the rear sides of output terminals of the Mach-Zehnder optical waveguides. The monitor units 11 are the optical devices according to Example 4 or 5 shown in Figs. 7 and 8. In the optical SSB modulator having the above-mentioned structure, the corresponding monitor units 11 could individually monitor the outputs of the main and sub Mach-Zehnder optical waveguides 103, 104a, and 104b. Therefore, bias control by feedback could be performed to accurately execute SSB modulation.
The present invention can be applied to modulators other than the optical SSB modulator. For example, the monitor unit 11 may be provided in a light intensity modulator including only a single-stage Mach-Zehnder optical waveguide, and the same bias control as described above may be performed.

### Industrial Applicability

According to the present invention, it is possible to effectively split a portion of light traveling through an optical waveguide in a direction that is substantially vertical to the surface of the optical waveguide. In addition, it is possible to detect the split light to monitor light traveling through the optical waveguide with high efficiency. Therefore, it is possible to provide an optical device having an optical waveguide splitting structure that is suitable to defect a portion of light traveling through an optical waveguide with high efficiency, and a method of manufacturing the optical device.

## Claims

1. An optical device comprising:
an optical waveguide element that has an optical waveguide formed on a substrate; and
an optical medium that is provided on the surface of the substrate so as to cover at least a portion of the optical waveguide,
wherein an end surface of the optical medium that faces a front side in a direction in which light travels through the optical waveguide is substantially vertical to the surface of the optical waveguide.

2. The optical device according to claim 1,
wherein the optical medium is formed by a thin film forming process and a pattern forming process.

3. The optical device according to claim 1 or 2,
wherein, after the optical medium is formed by the thin film forming process, or the thin film forming process and the pattern forming process, the end surface of the optical medium that faces the front side in the traveling direction of the light is processed to adjust at least one of the flatness of the end surface and an angle formed between the end surface and the surface of the optical waveguide.

4. The optical device according to claim 2 or 3,
wherein the optical medium is a semiconductor thin film or a dielectric thin film.

5. The optical device according to any one of claims 1 to 4,
wherein the optical medium is provided so as to come into contact with the surface of the optical waveguide.

6. The optical device according to any one of claims 1 to 5,
wherein the refractive index of the optical medium at the wavelength of the light traveling through the optical waveguide is greater than that of the substrate at the wavelength.

7. The optical device according to any one of claims 1 to 6,
wherein a line of intersection between the end surface of the optical medium that faces the front side in the traveling direction of the light and the surface of the optical waveguide is inclined at a predetermined angle with respect to the traveling direction of the light in the optical waveguide.

8. The optical device according to any one of claims 1 to 7,
wherein a plurality of optical media are provided along the traveling direction of the light.

9. The optical device according to any one of claims 1 to 8, further comprising:
an optical detector that is provided above the optical medium,
wherein the optical detector detects a portion of light that travels through the optical waveguide and is radiated to the optical medium in the direction that is substantially vertical to the surface of the optical waveguide.

10. The optical device according to claim 9,
wherein the optical medium is formed of a semiconductor, and is connected to the ground.

11. A method of manufacturing an optical device including an optical waveguide element that has an optical waveguide formed on a substrate and a thin optical medium that is provided so as to cover at least a portion of the optical waveguide, the method comprising:
a thin film forming step of forming the thin optical medium with a predetermined material on the substrate;
a pattern forming step of patterning the optical medium such that it covers at least a portion of the optical waveguide and a side surface thereof that faces a front side in a direction in which light travels through the optical waveguide is substantially vertical to the surface of the optical waveguide; and
a processing step of adjusting at least one of the flatness of an end surface that faces the front side in the traveling direction of light in the optical waveguide and an angle formed between the end surface facing the front side and the surface of the optical waveguide.
